Europäisches Patentamt

European Patent Office

Office européen des brevets

(11) Publication number: **0 051 970**
**B1**

# EUROPEAN PATENT SPECIFICATION

(45) Date of publication of patent specification: **16.05.90**

(51) Int. Cl.⁵: **G 02 B 17/08**

(21) Application number: **81305217.2**

(22) Date of filing: **03.11.81**

(54) **Optical system having a dual field of view.**

(30) Priority: **10.11.80 US 205365**

(43) Date of publication of application:
**19.05.82 Bulletin 82/20**

(45) Publication of the grant of the patent:
**16.05.90 Bulletin 90/20**

(84) Designated Contracting States:
**CH DE GB IT LI**

(56) References cited:
**DE-A-2 720 990**
**GB-A-1 322 333**

(73) Proprietor: **HONEYWELL INC.**
**Honeywell Plaza**
**Minneapolis Minnesota 55408 (US)**

(72) Inventor: **Abel, Irving R.**
**22 Partridge Road**
**Lexington Massachusetts 02173 (US)**
Inventor: **Hatch, Marcus R.**
**36 River Street**
**Arlington Massachusetts 02174 (US)**

(74) Representative: **Fox-Male, Nicholas Vincent Humbert**
**Honeywell Control Systems Limited Charles Square**
**Bracknell Berkshire RG12 1EB (GB)**

Courier Press, Leamington Spa, England.

## Description

The present invention relates to an optical system having a dual field of view. More particularly, the present invention relates to a simple, space-efficient mechanical actuation of a field of view change function made possible by a cassegrainian configuration. (The precise definition of a Cassegrain system is one consisting of a concave primary mirror which is specifically a parabola and a convex secondary mirror which is specifically a hyperbola. However, systems comprising a concave primary mirror and a convex secondary mirror are now often referred to as cassegrainian systems without particular reference to the particular geometry of the mirrors.)

The present invention provides a dual field of view without the complexity typically found in prior art systems. See, for example, the following U.S. Patents: 2,761,072; 2,798,961; 2,798,962 and 3,881,103.

In the systems disclosed in each of these patents, at least one additional movable mirror or prism has been added for the purpose of providing a dual or multiple function. As explained further below, this is in contrast with the aim of the present optical system which employs a simple, space efficient movement of an optical element which is not added to the system but, rather, is an inherent part of a cassegrainian arrangement.

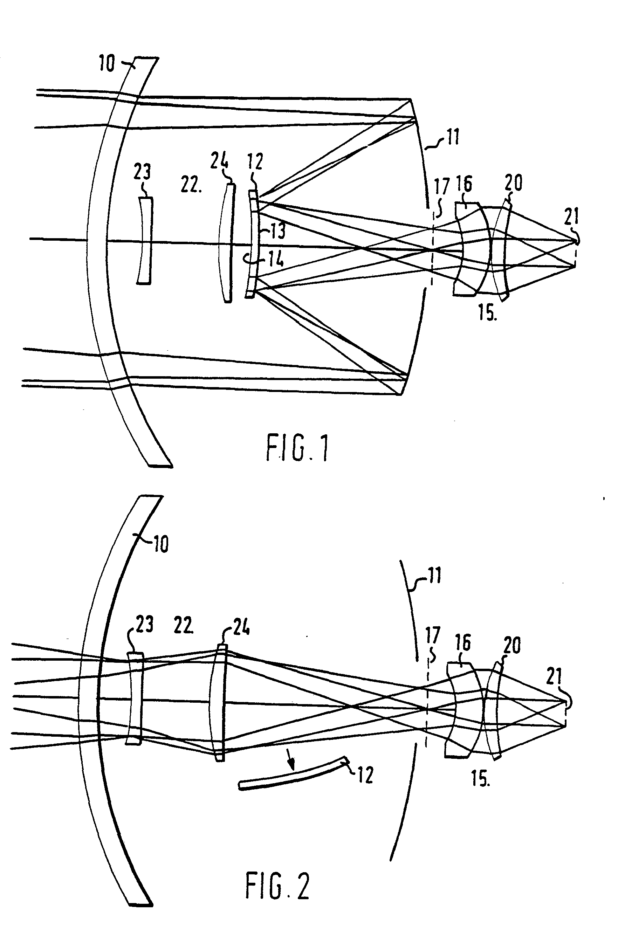

According to the present invention there is provided an optical system comprising a wide-angle objective comprising at least one lens; a concave primary mirror; a convex secondary mirror characterized in that the secondary mirror is movable between a first position (Figure 2) and a second position (Figure 1), the secondary mirror when in the first position permitting the wide-angle objective to focus radiation; the secondary mirror when in the second position preventing radiation from being focused by the wide-angle objective; the combination of the secondary mirror when in the second position and the primary mirror comprising a narrow-angle objective with the primary mirror converging radiation to the secondary mirror and the secondary mirror focusing radiation.

An embodiment of the invention will now be described by way of example, with reference to the accompanying drawings, in which:

Figure 1 shows an optical system of the present invention in a narrow-angle mode of operation, and
Figure 2 shows the optical system of Figure 1 in a wide-angle mode of operation.

Referring to Figure 1, collimated radiation from a point in the scene is transmitted through a concentric dome window 10 with appropriate refractions at each surface. The beam is slightly divergent as it impinges upon a concave primary front surface mirror 11. It is then converged to a secondary mirror 12 which reduces convergence of the beam while reflecting it backward, the radiation being focused at a field stop 17. The radiation may then be transmitted through collimator 15 comprising lenses 16 and 20 having appropriate refractions at each surface. Lenses 16 and 20 collimate the radiation and direct it through exit pupil 21.

In the embodiment disclosed, secondary mirror 12 is a mangin mirror having a first surface 13 and a second or back surface 14, back surface 14 being coated with reflective material. Mirrors 11 or 12, or both 11 and 12 may be mangin mirror configured to control field curvature. However, in its simplest form, the mirrors do not provide for correction of field curvature. For example, the present optical system may be employed in systems which are not compact or in compact systems in which field curvature control is achieved by more conventional means; in such situations, the mirrors 11 and 12 may be of any design found suitable for the intended purpose and may be of either front or back surface configuration. Alternately, either mirror may be a mangin mirror with surfaces such as 13 and 14 having a shape for providing control of field curvature.

In the embodiment disclosed, mangin secondary mirror 12 reduces convergence of the beam while reflecting it backward, the radiation being focused at field stop 17. The radiation is then transmitted through collimator 15 comprising lenses 16 and 20 having appropriate refractions at each surface. Lenses 16 and 20 collimate the radiation and direct it through exit pupil 21. Mangin secondary mirror 12 only partially corrects field curvature, the field curvature being completely corrected following collimator 15 (lenses 16 and 20). However, in alternative embodiments, surfaces 13 and 14 of mirror 12 may be shaped to completely correct field curvature at field stop 17. Thus, mangin secondary mirror 12 may be employed to contribute whatever degree of field curvature is necessary to flatten the field or to control the field curvature to the desired flatness.

The field curvature contribution of mangin secondary mirror 12 is 1/R and may be defined by an equation

$$1/R = 2[(n-1)/r_1 + 1/r_2]/n.$$

In this equation, R is the radius of the field curvature, $n$ is the index of refraction of the mangin mirror lens, $r_1$ is the radius of the first surface (surface 13 in the disclosed embodiment), and $r_2$ is the radius of the second or back surface (surface 14 in the disclosed embodiment). Thus, once the material for the mangin mirror lens is selected, $n$ is known from available references, and the radii of surfaces 13 and 14 can be calculated to provide any desired degree of field curvature control.

The first and second surfaces of mangin mirror 12 also allows one to select any combination of focusing power and field curvature contribution. For the normal situation in which the mangin mirror is thin, power of the mangin mirror is 1/f and may be defined by the equation

$$1/f = 2[n/r_2 - (n-1)/r_1].$$

In this equation, $f$ is the focal length of the mangin mirror, $n$ is the index of refraction of the mangin mirror lens, $r_1$ is the radius of the first surface (surface 13 in the disclosed embodiment), and $r_2$ is the radius of the second or rear surface (surface 14 in the disclosed embodiment).

The present optical system provides a simple, space-efficient mechanical actuation of a field of view change function made possible by the cassegrainian configuration. A wide-angle mode of operation (Figure 2) is introduced simply by pivoting or otherwise moving secondary mirror 12 out of the path of a fixed objective 22 which in the disclosed embodiment comprises lenses 23 and 24. As with mirrors 11 and 12 comprising the narrow-angle objective, wide-angle objective 22 focuses radiation in the plane of field stop 17. Thus, for the disclosed embodiment, collimator 15 is common to both modes of operation. Obviously, although it may normally be the case, the system employing the present optical system would not require that the wide-angle objective (lenses 23 and 24 in the disclosed embodiment) and the narrow-angle objective (mirrors 11 and 12 in the disclosed embodiment) focus radiation at the same location.

Secondary mirror 12 may be made movable through a pivot and stop, sliding mechanisms, or other suitable hardware (not shown).

Tables 1, 2 and 3 set forth below give the dimensions and parameters of one preferred embodiment of an optical system comprising the present invention.

## TABLE 1

### SPECIFICATION-NARROW ANGLE MODE EXAMPLE

| Element | Radius milli-metres(mm) | Thickness milli-metres(mm) | Material | Conic Constant |
|---|---|---|---|---|
| Dome 10 | 152.40 | 7.62 | Zinc Sulfide | |
| | 144.78 | 121.92 | | |
| Primary Mirror 11 | -182.02 | -64.90 | Aluminum | -.75102 |
| Secondary Mirror 12 | -171.65 | -2.54 | Germanium | |
| | -139.07* | 2.54 | | -4.7 |
| Field Stop 17 | | 64.90 | | |
| | | 12.73 | | |
| Collimator Lens 16 | -20.78 | 10.19 | Germanium | |
| | -26.60 | .25 | | |
| Collimator Lens 20 | 39.22 | 5.08 | Germanium | -.3565 |
| | 59.44 | | | |
| Exit Pupil 21 | | 26.42 | | |

\* Surface is Aspheric:

$$Sag = \frac{\frac{y^2}{r}}{1 + \sqrt{1 - (K+1)\frac{y^2}{r^2}}} + dy^4 + ey^6 + fy^8$$

where

$d = 2.213 \times 10^{-3}$     $y$ = Aperture height

$e = -1.459 \times 10^{-3}$     $r$ = Radius of the surface

$f = 4.591 \times 10^{-4}$     $k$ = Conic Constant

# EP 0 051 970 B1

## TABLE 2

### SPECIFICATION-WIDE ANGLE MODE EXAMPLE

| Element | Radius milli-metres (mm) | Thickness milli-metres(mm) | Material | Conic Constant |
|---|---|---|---|---|
| Dome 10 | 152.40 | 7.62 | Zinc Sulfide | |
| | 144.78 | 13.97 | | |
| Objective Lens 23 | -221.03 | 3.81 | Germanium | |
| | | 25.4 | | |
| Objective Lens 24 | 106.68 | 5.08 | Germanium | -2.263 |
| | 614.40 | 86.39 | | |
| Collimator Lens 16 | -20.78 | 10.19 | Germanium | |
| | -26.59 | 0.25 | | |
| Collimator Lens 20 | 39.22 | 5.08 | Germanium | -.3565 |
| | 59.44 | | | |
| Exit Pupil 21 | | 26.42 | | |

## TABLE 3

### EXAMPLE SYSTEM PARAMETERS - (Narrow Angle Mode)

| | |
|---|---|
| Telescope Magnification | 11.9 |
| External Field of View | $2.38^{\circ} \times 3.22^{\circ}$ |
| Entrance Pupil Diameter | 111.76 mm |
| Objective F-Number | 2.0 |
| Objective Focal Length | 224.79 mm |
| Collimator Focal Length | 18.10 mm |

Tables 1 and 2 are laid out in a manner common in the art; if more than one dimension is given for an element, the dimensions appear in the order that light travels from the scene through the system. For example, for dome 10, the first radius listed of 152.40 mm corresponds to the first surface of dome 10, and the radius of 144.78 mm corresponds to the second surface of dome 10.

In the thickness column of Table 1, the numbers include on-axis air space thicknesses listed in the order in which light travels through the system. Accordingly, the first number of 7.62 mm is the thickness of dome 10. The second number of 121.92 mm corresponds to the on-axis distance between the second surface of dome 10 and a point that would intersect the radius of the reflective front surface of primary mirror 11. The minus sign associated with the first dimension of 64.90 mm indicates light travelling in a backward direction. The 2.54 mm number listed in association with mangin secondary mirror 12 indicates the thickness of the mirror, the first number being negative since light is travelling in the reverse direction in its first transit to the reflective back surface 14 of that mirror. The positive 64.90 mm dimension is the air space distance between first surface 13 of mirror 12 and field stop 17, which is the first focal plane. The dimension of 12.73 mm is the distance between field stop 17 and the first surface of lens 16 within collimator 15. The 10.19 mm dimension listed in association with collimator lens 16 is the thickness of that lens, the .25 mm dimension being the air space thickness between the second surface of lens 16 and the first surface of lens 20. The 5.08 mm dimension listed in association with lens 20 is the thickness of that

4

lens, the 26.42 mm dimension being the distance between the second surface of lens 20 and exit pupil 21.

Further, although mirrors 11 and 12 are both disclosed as aspheric (see Table 1), either or both of these mirrors can be spherical.

In addition, while primary mirror 11 is disclosed as having an aperture for transmission of radiation reflected from secondary mirror 12, the system could be configured without the aperture and with secondary mirror 12 reflecting radiation past the edge of primary mirror 11.

In the present optical system, compactness of the cassegrainian narrow-angle objective can be quantified by a ratio of the narrow-angle objective physical length divided by the narrow angle objective focal length. For the embodiment disclosed in Tables 1, 2 and 3, that ratio is 0.30 which is obtained by dividing 67.44 mm (2.54 mm plus 64.90 mm) by 224.79 mm; in this calculation, 2.54 mm is the thickness of mangin secondary mirror 12, 64.90 mm is the air space distance between the first surface of mirror 12 and field stop 17 (the first image), and 224.79 mm is the objective focal length.

## Claims

1. An optical system comprising a wide-angle objective (22) comprising at least one lens; a concave primary mirror (11), and a convex secondary mirror (12) characterized in that the secondary mirror (12) is movable between a first position (Figure 2) and a second position (Figure 1), the secondary mirror (12) when in the first position permitting the wide-angle objective (22) to focus radiation; the secondary mirror (12) when in the second position preventing radiation from being focused by the wide-angle objective; the combination of the secondary mirror (12) when in the second position and the primary mirror (11) comprising a narrow-angle objective with the primary mirror (11) converging radiation to the secondary mirror (12) and the secondary mirror focusing radiation.

2. The optical system of Claim 1, characterized in that the convex secondary mirror (12) has a first and second surface (13, 14), the second surface (14) being coated with reflective material, the radiation received from the primary mirror (11) being refracted at the first surface (13) reflected back from the second surface (14), and then refracted once again by the first surface (13), the configuration of the first and second surfaces providing control of field curvature.

3. The optical system of any one of the preceding Claims, characterized in that the radiation is focused at the same location (17) by both the wide-angle (22) and narrow-angle objectives (11, 12).

4. The optical system of any one of the preceding Claims, characterized in that one or both the primary mirror (11) and the secondary mirrors (12) are aspheric.

5. The optical system of any one of the preceding Claims, characterized in that the primary mirror (11) has an aperture for transmission of radiation reflected from the secondary mirror (12).

6. The optical system of any one of the preceding Claims, characterized in that compactness of the narrow-angle objective measured by the ratio

$$\frac{\text{narrow-angle objective physical length}}{\text{narrow-angle objective focal length}}$$

is approximately 0.3.

## Patentansprüche

1. Optisches System mit einem Weitwinkelobjektiv (22), welches umfaßt: wenigstens eine Linse, einen konkaven Primärspiegel (11) und einen konvexen Sekundärspiegel (12), dadurch gekennzeichnet, daß der Sekundärspiegel (12) zwischen einer ersten Position (Fig. 2) und einer zweiten Position (Fig. 1) verschiebbar ist, wobei der Sekundärspiegel (12) in der ersten Position dem Weitwinkelobjektiv (22) eine Strahlungsfokussierung gestattet; der Sekundärspiegel (12) in der zweiten Position Strahlung an einer Fokussierung durch das Weitwinkelobjektiv hindert; und wobei die Kombination des Sekundärspiegels (12), wenn er sich in der zweiten Position befindet, und des Primärspiegels (11) ein Schmalwinkelobjektiv ergibt, bei dem der Primärspiegel (11) die Strahlung auf dem Sekundärspiegel (12) konvergiert und der Sekundärspiegel die Strahlung fokussiert.

2. Optisches System nach Anspruch 1, dadurch gekennzeichnet, daß der konvexe Sekundärspiegel (12) eine erste und eine zweite Oberfläche (13, 14) aufweist, wobei die von dem Primärspiegel (11) empfangene Strahlung an der ersten Oberfläche gebrochen wird, von der zweiten Oberfläche zurückgeworfen wird und sodann erneut an der ersten Oberfläche gebrochen wird, wobei die Ausgestaltung der ersten und zweiten Oberfläche die Feldablenkung steuert.

3. Optisches System nach einem der vorangehenden Ansprüche, dadurch gekennzeichnet, daß die Strahlung sowohl von dem Weitwinkelobjektiv (22) als auch von dem Schmalwinkelobjektiv (11, 12) an dem gleichen Ort (17) fokussiert wird.

4. Optisches System nach einem der vorangehenden Ansprüche, dadurch gekennzeichnet, daß von dem Primärspiegel (11) und dem Sekundärspiegel (12) einer oder beide asphärisch ausgebildet sind.

5. Optisches System nach einem der vorangehenden Ansprüche, dadurch gekennzeichnet, daß der Primärspiegel (11) eine öffnung aufweist, um die von dem Sekundärspiegel (12) reflektierte Strahlung zu übertragen.

6. Optisches System nach einem der vorangehenden Ansprüche, dadurch gekennzeichnet, daß die Kompaktheit des Schmalwinkelobjektivs, gemessen durch das Verhältnis

$$\frac{\text{physikalische Länge des Schmalwinkelobjektivs}}{\text{Brennweite des Schmalwinkelobjektivs}}$$

ungefähr 0,3 beträgt.

**Revendications**

1. Un système optique comportant un objectif grand angle (22) comprenant au moins une lentille, un premier miroir concave (11) et un deuxième miroir convexe (12), caractérisé en ce que le deuxième miroir (12) est mobile entre une première position (fig. 2) et une deuxième position (fig. 1), le deuxième miroir (12) lorsqu'il est dans la première position permettant à l'objectif grand angle (22) de focaliser le rayonnement, le deuxième miroir (12) lorsqu'il est dans la deuxième position empêchant le rayonnement d'être focalisé par l'objectif grand angle, la combinaison du deuxième miroir (12) lorsqu'il est dans la deuxième position et du premier miroir (11) comprenant un objectif petit angle avec le premier miroir (11) convergeant le rayonnement au deuxième miroir (12) et le deuxième miroir focalisant les rayonnement.

2. Système optique selon la revendication 1, caractérisé en ce que le deuxième miroir convexe (12) présente une première et une deuxième surfaces (13, 14), la deuxième surface (14) étant revêtue d'une matière réflectrice, le rayonnement reçu à partir du premier miroir (11) étant réfracté à la première surface (13) réfléchi à partir de la deuxième surface (14) et réfracté à nouveau à la première surface (13), la configuration de la première et de la deuxième surfaces procurant le réglage de courbure du champ.

3. Système optique selon l'une des revendications 1 ou 2, caractérisé en ce que le rayonnement est focalisé au même emplacement (17) tant par l'objectif (11) grand angle (22) que par l'objectif (12) petit angle.

4. Système optique selon l'une quelconque des revendications 1 à 3, caractérisé en ce que l'un ou les deux du premier miroir (11) et du deuxième miroir (12) est ou sont asphériques.

5. Système optique selon l'une quelconque des revendications 1 à 4, caractérisé en ce que le premier miroir (11) présente une ouverture pour la transmission du rayonnement réfléchi à partir du deuxième miroir (12).

6. Système optique selon l'une quelconque des revendications 1 à 5, caractérisé en ce que la compacité de l'objectif petit angle mesurée par le rapport

$$\frac{\text{longueur physique objectif petit angle}}{\text{focale de l'objectif petit angle}}$$

est approximativement 0,3.

FIG.1

FIG.2

1